# EUROPÄISCHE PATENTSCHRIFT

(11) **EP 3 543 499 B1**
(45) Veröffentlichungstag und Bekanntmachung des Hinweises auf die Patenterteilung: **10.03.2021**
(21) Anmeldenummer: 19163463.3
(22) Anmeldetag: 18.03.2019
(51) Int. Cl.: F01N 13/18, F01N 3/28, B21C 37/08, B23K 26/242, B23K 26/262, B23K 26/32, B23K 33/00, B23K 101/06, B23K 101/12, B23K 103/04, B23K 101/00

(54) **ABGASANLAGENKOMPONENTE**
WASTE GAS SYSTEM COMPONENT
COMPOSANT D'INSTALLATION DE GAZ D'ÉCHAPPEMENT

(30) Priorität: 22.03.2018 DE 102018106834
(43) Veröffentlichungstag der Anmeldung: 25.09.2019
(73) Patentinhaber: Faurecia Emissions Control Technologies, Germany GmbH, 86154 Augsburg (DE)
(72) Erfinder: Blüml, Alfred, 86154 Augsburg (DE)
(74) Vertreter: Prinz & Partner mbB

(56) Entgegenhaltungen:
- WO-A1-2011/088852
- CN-B- 103 358 043
- DE-A1- 10 131 466
- FR-A1- 2 857 609
- GB-A- 758 124
- US-A- 2 234 450

## Beschreibung

Die Erfindung betrifft eine Abgasanlagenkomponente, insbesondere einen Katalysator oder einen Partikelfilter, für ein Abgassystem eines Verbrennungsmotors eines Kraftfahrzeugs, mit einem Substrat, das in einem im Wesentlichen zylinderförmigen Gehäuse gehalten ist, wobei das Gehäuse einen Gehäusemantel aufweist, der ein um eine Zylinderachse gebogenes Blech umfasst, dessen bezüglich der Zylinderachse in Umfangsrichtung orientierte Enden einen mittels einer Schweißnaht verbundenen Stoß ausbilden, wobei die Enden jeweils zumindest abschnittsweise eine Abschrägung aufweisen.

In diesem Zusammenhang ist der Begriff zylinderförmig so zu verstehen, dass das Gehäuse die Form eines allgemeinen Zylinders hat. Eine Grundfläche des Zylinders kann also kreisförmig sein, muss aber nicht. In gleicher Weise sind auch zylinderförmige Gehäuse mit elliptischen, vieleckigen, z. B. rechteckigen, und beliebig gestalteten Grundflächen gemeint.

Eine Abgasanlagenkomponente, die ohne Abschrägungen ausgeführt ist, ist beispielsweise aus der DE 10 2005 029 163 A1 bekannt. Dabei sind die beiden in Umfangsrichtung orientierten Enden in einem Überlappstoß angeordnet und miteinander verschweißt. Somit entsteht ein mechanisch stabiles und fluiddichtes Gehäuse.

Der Überlappstoß führt dazu, dass stets ein Blechabschnitt zwischen der Schweißnaht und dem Substrat oder anderen innerhalb des Gehäuses angeordneten Materialien liegt. Es wird so eine Beschädigung des Substrats sowie der anderen Materialien beim Herstellen der Schweißnaht wirkungsvoll verhindert.

Aufgrund des hohen Kostendrucks in der Automobilindustrie wird allgemein auch im Bereich der Abgasanlagen und deren Komponenten angestrebt, diese möglichst kostengünstig herzustellen.

Vor diesem Hintergrund ist aus der DE 101 31 466 A1 eine Abgasanlagenkomponente der eingangs genannten Art bekannt geworden.

Die Aufgabe der Erfindung ist es , Abgasanlagenkomponenten der eingangs genannten Art hinsichtlich der Herstellkosten weiter zu verbessern. Ferner sollen sie in ihrer Funktion zuverlässig sein und eine hohe Lebensdauer aufweisen.

Die Aufgabe wird durch eine Abgasanlagenkomponente der eingangs genannten Art gelöst, bei der die Schweißnaht von einer Innenfläche des Gehäusemantels beabstandet ist und die Abschrägungen innerhalb des Stoßes einander gegenüberliegen, wobei jede der Abschrägungen mit einer Radialebene des Gehäusemantels einen Winkel von mindestens 5° einschließt. Die Schweißnaht weist also von der Innenfläche des Gehäusemantels einen Abstand größer null auf. Anders gesagt, findet kein Durchschweißen des Blechs statt. Bevorzugt erstreckt sich die Schweißnaht über weniger als 90 %, insbesondere über weniger als 80 % einer Dicke des Blechs. Dadurch sind bzw. ist das innerhalb des Gehäusemantels angeordnete Substrat und/oder andere dort vorhandenen Materialien vor den Einflüssen desjenigen Schweißprozesses geschützt, mittels dem die Schweißnaht erzeugt wird. Insbesondere wirkt somit die Schweißenergiequelle, zum Beispiel ein Schweißbrenner oder ein Laser, nicht direkt auf das Substrat und die anderen Materialien. Eine mittelbare, thermische Auswirkung des Schweißprozesses auf das Substrat und die anderen Materialien wird durch denjenigen Bereich des Gehäusemantels, der zwischen der Schweißnaht und dem Inneren des Gehäuses angeordnet ist, abgeschirmt. Es können somit Beschädigungen und andere negative Einflüsse vom Substrat und den anderen Materialien ferngehalten werden, sodass sich eine zuverlässige Funktion und eine hohe Lebensdauer des Substrats sowie der anderer innerhalb des Gehäuses vorhandenen Materialien ergibt.

Das gebogene Blech weist zwei in Umfangsrichtung orientierte Enden auf, die jeweils eine im Wesentlichen in Umfangsrichtung orientierte Endfläche umfassen. Dabei ist unter einer Abschrägung eine gewollte und wesentliche Abweichung zumindest eines Abschnitts der Endfläche von einer bezüglich der Zylinderachse radial verlaufenden Ebene zu verstehen. Der Abschnitt der Endfläche ist also gegenüber der Radialebene geneigt. Dabei sind Endflächen oder Abschnitte davon, die in einer idealisierten, theoretischen Betrachtung in der Radialebene verlaufen, jedoch aufgrund von Toleranzen in der praktischen Umsetzung von dieser abweichen, nicht als Abschrägungen im Sinne der Erfindung zu verstehen. Gleiches gilt für Abweichungen von der Radialebene, die aus Nebeneffekten eines in radialer Richtung ausgeführten Fertigungsverfahrens resultieren. Es sind somit insbesondere Endflächen und Abschnitte davon, die durch Fließphänomenen entstehen, nicht als Abschrägungen zu verstehen. Solche Fließphänomene treten z. B. beim Blechbeschnitt oder beim Stanzen von Blechen auf.

Aufgrund der Abschrägungen ist somit die Schweißnaht zusätzlich gegenüber dem Substrat und anderen innerhalb des Gehäuses vorliegenden Materialien abgeschirmt. Dies gilt insbesondere im Vergleich zu im Wesentlichen in Radialrichtung verlaufenden Endflächen, die den Stoß bilden. Das Substrat und die anderen Materialien werden also auch durch diesen Umstand vor den Einflüssen eines Schweißverfahrens geschützt. Dies gilt in besonderem Maße, wenn eine zum Erstellen der Schweißnaht genutzte Schweißenergiequelle hauptsächlich in radialer Richtung wirkt.

Beim Stoß der abgeschrägten Enden handelt es also um einen modifizierten Stumpfstoß, wobei die miteinander zu verschweißenden Enden des Blechs in Richtung einer Blechdicke nicht gegeneinander versetzt sind. Dadurch sinkt insbesondere im Vergleich zum bekannten Überlappstoß der Materialbedarfs zur Herstellung des Gehäusemantels. Folglich kann der Gehäusemantel besonders kostengünstig hergestellt werden. Zudem wird so ein geringes Gewicht der Abgasanlagenkomponente gewährleistet.

Das Blech ist vorzugsweise ein Stahlblech, insbesondere ein Edelstahlblech. Eine Blechstärke oder Blechdicke beträgt in diesem Zusammenhang bevorzugt weniger als 0,5 mm. Beispielsweise kann das Blech 0,2 mm stark sein. Solche Bleche werden teilweise auch als Folien bezeichnet.

Im Bereich der Katalysatoren und Partikelfilter kann das Substrat alternativ auch als Monolith bezeichnet werden.

Bevorzugt ist in axialer Richtung betrachtet eine Stoßkontur eines der Enden eine Negativkontur einer Stoßkontur des jeweils anderen Endes. Die Enden liegen somit insbesondere flächig aneinander an. Dadurch kann die Schweißnaht an jedem Ende mit einem vergleichsweise großen Bereich des Blechs zusammenwirken, sodass die Enden des Blechs mechanisch stabil und dadurch zuverlässig miteinander verbunden sind.

Jede der Abschrägungen kann mit einer Radialebene des Gehäusemantels einen Winkel von mindestens 15°, vorzugsweise von mindestens 20°, einschließen. Solche Abschrägungen sind vergleichsweise einfach herstellbar. Zudem hat sich herausgestellt, dass in diesen Winkelbereichen ein besonders guter Kompromiss zwischen einer mechanisch stabilen Verbindung der Enden über die Schweißnaht und einen wirkungsvollen Schutz des Substrats und der anderen, innerhalb des Gehäuses vorhandenen Materialien vor den Einflüssen eines Schweißprozesses bewirkt wird.

Gemäß einer Ausführungsform sind die Abschrägungen entgegengesetzt orientierte, über die gesamte Dicke des Blechs verlaufende Fasen. Dabei verlaufen die Fasen beispielsweise unter einem Winkel von 45°. Ebenso sind 30°-Fasen oder 60°-Fasen möglich. Solche Abschrägungen lassen sich besonders effizient herstellen.

Beispielsweise können die Abschrägungen im Zuge eines Beschnitts des Blechs hergestellt werden. Das Blech wird dann anstatt in Richtung einer Blechdicke schräg dazu abgeschnitten. Der Blechbeschnitt kann mittels eines Lasers erfolgen.

Beim Zuschneiden des Blechs mit einem Laser ergibt sich der Vorteil, dass die gewünschten Winkel mit sehr hoher Genauigkeit eingehalten werden können. Dies ist insbesondere deshalb wichtig, da sich der erfindungsgemäße Effekt bereits bei Winkeln ab 5° einstellt.

Alternativ ist eine der Abschrägungen eine nur über einen Teil einer Dicke des Blechs verlaufende Fase. Die Fase ist somit lediglich an einer Kante einer Endfläche des Blechs vorgesehen. Somit stellt die Abschrägung nur einen Teil einer Endfläche des Blechs dar. Die übrigen Teile der Endfläche verlaufen im Wesentlichen in einer Radialebene. Auch solche Fasen können einfach und kostengünstig hergestellt werden.

Dabei kann die der als Fase ausgebildeten Abschrägung gegenüberliegende Abschrägung an einem Blechfortsatz angeordnet sein, insbesondere wobei eine radiale Dicke des Blechfortsatzes im Wesentlichen einer radialen Höhe der Fase entspricht. Der Blechfortsatz kann auch als Vorsprung oder Rand bezeichnet werden. Gegenüber der Blechstärke ist dabei eine Dicke des Blechfortsatzes reduziert. Insbesondere stellt die den Blech Fortsatz umfassende Endkontur ein Negativ der die Fase umfassenden Endkontur dar.

Vorteilhafterweise ist die Schweißnaht eine Laserschweißnaht, insbesondere wobei die Schweißnaht im Wesentlichen über die gesamte axiale Länge des Gehäusemantels verläuft. Laserschweißnähte können schnell und wiederholgenau produziert werden. Insbesondere ist dabei das zugehörige Laserschweißverfahren besonders gut für die Herstellung von Bauteilen in Großserie geeignet. Wenn die Schweißnaht über die gesamte axiale Länge des Gehäusemantels verläuft, gewährleistet sie eine mechanisch stabile Verbindung der Enden. Gleichzeitig kann so ein im Wesentlichen fluiddichter Gehäusemantel geschaffen werden. Dies trägt einer zuverlässigen Funktion sowie einer hohen Lebensdauer der Abgasanlagenkomponente bei.

Gemäß einer Variante ist das Substrat über eine Lagerungsmatte am Gehäusemantel gelagert, insbesondere wobei die Lagerungsmatte sowohl am Substrat als auch am Gehäusemantel im Wesentlichen flächig anliegt. Die Lagerungsmatte dient dabei einerseits der Vibrationsdämpfung. Es werden somit im Betrieb der Abgasanlagenkomponente auftretende Vibrationen vom Substrat ferngehalten oder gegenüber dem Substrat gedämpft. Zudem können über die Lagerungsmatte zwischen dem Substrat und dem Gehäusemantel auftretende Toleranzen ausgeglichen werden, sodass das Substrat fest und zuverlässig im Gehäusemantel gehalten ist.

Vorzugsweise liegt die Lagerungsmatte zwischenschichtfrei, insbesondere binderfrei, am Substrat an. Der Aufbau der Abgasanlagenkomponente ist somit besonders einfach. Zudem werden durch das Fortlassen des Binder im Vergleich zu bekannten Abgasanlagekomponenten Kosten eingespart.

Ferner kann das Blech des Gehäusemantels in einer dem Gehäusemantelumfang entsprechenden Dimension der Lagerungsmatte individuell angepasst sein. Insbesondere ist das Blech in seiner dem Gehäusemantelumfang entsprechenden Dimension einem Gewicht und/oder einem Flächengewicht der Lagerungsmatte individuell angepasst. Im fertig montierten Zustand der Abgasanlagenkomponente wird das Substrat über die Lagerungsmatte im Gehäuse gehalten. Dabei kann die Lagerungsmatte komprimiert sein. Die dem Gehäusemantelumfang entsprechende Dimension des Blechs kann also an eine Dicke oder mittlere Dicke der Lagerungsmatte angepasst sein. Ebenfalls kann diese Dimension des Blechs unter Berücksichtigung der Kompressionseigenschaften der Lagerungsmatte ermittelt werden. Kenngrößen der Lagerungsmatte, die mittelbar die Dicke sowie die Kompressionseigenschaften beinhalten, sind das Gewicht und das Flächengewicht einer Lagerungsmatte mit vorbestimmter Länge und Breite. Das Gewicht sowie das Flächengewicht können in einer Produktionsumgebung einfach und zuverlässig ermittelt werden. Durch die individuelle Anpassung des Blechs an die Lagerungsmatte kann das Substrat unter bestmöglicher Ausnutzung der Vibrationsdämpfungseigenschaften und/oder der Toleranzausgleichseigenschaften der Lagerungsmatte im Gehäuse gehalten werden.

Eine bevorzugte Ausführungsform sieht vor, dass der Gehäusemantel in radialer Richtung eine im Wesentlichen konstante Dicke aufweist, insbesondere wobei die konstante Dicke einer Blechstärke entspricht. Wie bereits erwähnt, überlappen sich also die Enden des Blech nur innerhalb der Blechstärke. Insbesondere bilden diese keinen Überlappstoß im klassischen Sinne.

Die Schweißnaht kann in einem an einem axialen Ende des Gehäusemantels liegenden Bereich gegenüber der Zylinderachse geneigt verlaufen und/oder in einem von den axialen Enden des Gehäusemantels beabstandeten Mittelbereich im Wesentlichen entlang der Zylinderachse verlaufen. Dabei verläuft die Schweißnaht z. B. um 45° gegenüber der Zylinderachse geneigt. Gegenüber in Umfangsrichtung wirkenden Kräften sind somit die Bereiche, in denen die Schweißnaht gegenüber der Zylinderachse geneigt verläuft, besonders stabil. Es wird somit insbesondere ein endseitiges Aufbrechen oder Anreißen der Schweißnaht verhindert. Dadurch ergibt sich eine hohe Lebensdauer der Abgasanlagenkomponente.

Bevorzugt ist das Blech des Gehäusemantels in einer dem Gehäusemantelumfang entsprechenden Dimension dem Substrat individuell angepasst. Es werden also im Rahmen der Herstellung der Abgasanlagenkomponente eine oder mehrere Dimensionen des Substrats erfasst. Insbesondere wird ein Umfang des Substrats bestimmt. Davon ausgehend wird unter Berücksichtigung einer eventuell vorhandenen Lagerungsmatte ein Umfang des Blechs bestimmt. Das Blech wird dann entsprechen der Dimensionen und eventuell der Eigenschaften der Lagerungsmatte zugeschnitten. Somit weist der Gehäusemantel einen gewünschten Umfang auf, wenn die beiden Enden des Blechs den Stoß bilden. Die Enden bilden dabei, wie bereits erwähnt, keinen Überlappstoß.

Allgemein gesprochen kann also das Blech individuell an das Substrat angepasst werden. Dabei kann gleichzeitig eine individuelle Anpassung an die Lagerungsmatte erfolgen, wie weiter oben beschrieben.

Vorteilhafterweise ist das Substrat im Wesentlichen durch eine vom Gehäusemantel ausgehende, radiale Kompressionskraft im Gehäuse gehalten. Diese Kompressionskraft resultiert aus dem individuell an das Substrat und/oder die Lagerungsmatte angepassten Blech. Somit können alle weiteren Arbeitsschritte, die der Befestigung des Substrats im Gehäusemantel dienen, entfallen. Insbesondere sind keine Verklebungen und/oder keine zusätzlichen Umformungen des Blechs nötig. Somit kann die Abgasanlagenkomponente einfach und kostengünstig hergestellt werden.

Die Erfindung wird nachstehend anhand verschiedener Ausführungsbeispiele erläutert, die in den beigefügten Zeichnungen gezeigt sind. Es zeigen:
- Figur 1 eine erfindungsgemäße Abgasanlagenkomponente in einer Draufsicht,
- Figur 2 mehrere alternative Querschnitte der Abgasanlagenkomponente aus Figur 1 entlang der Linie II-II,
- Figur 3 ein Detail III der Abgasanlagenkomponente aus Figur 2 gemäß einer Ausführungsform,
- Figur 4 das Detail III gemäß einer weiteren Ausführungsform,
- Figur 5 das Detail III gemäß noch einer Ausführungsform,
- Figur 6 einen Verlauf der Schweißnaht einer Abgasanlagenkomponente gemäß Figur 1,
- Figur 7 einen alternativen Verlauf der Schweißnaht einer Abgasanlagenkomponente gemäß Figur 1,
- Figur 8 noch einen alternativen Verlauf der Schweißnaht einer Abgasanlagenkomponente gemäß Figur 1; und
- Figur 9 eine dem Detail III aus Figur 2 entsprechende Ansicht eines lediglich zum besseren Verständnis der Erfindung dienenden Beispiels, bei dem anstelle einer Abschrägung eine Abstufung vorliegt.

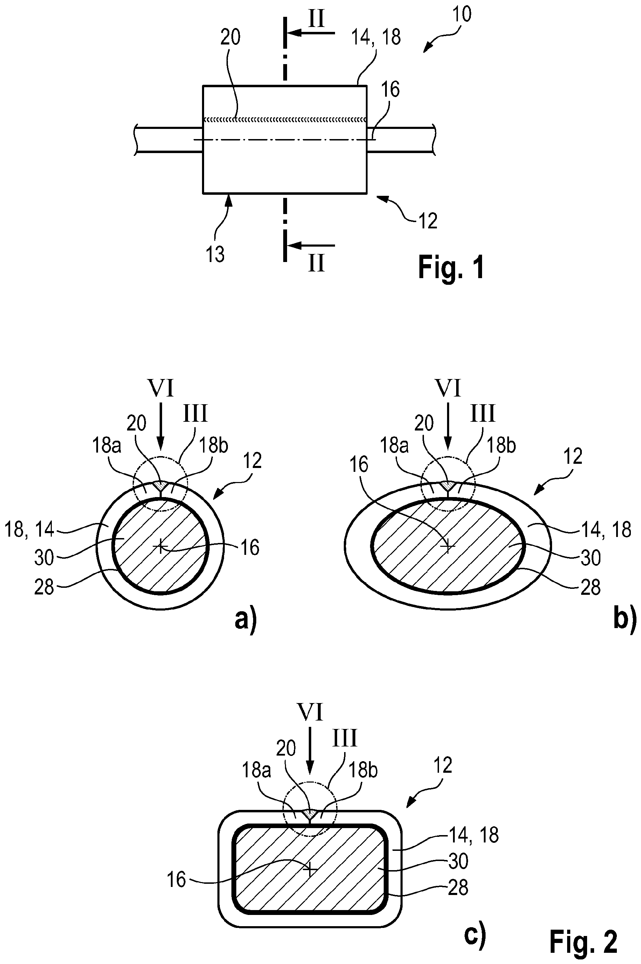

Figur 1 zeigt ein Abgassystem 10 eines Verbrennungsmotors eines Kraftfahrzeugs. Dieses umfasst eine Abgasanlagenkomponente 12, die vorliegend ein Katalysator oder eine Partikelfilter ist.

Die Abgasanlagenkomponente 12 hat ein im Wesentlichen zylinderförmiges Gehäuse 13 mit einem Gehäusemantel 14, der ein um eine Zylinderachse 16 gebogenes Blech 18 umfasst.

Entsprechend der in Figur 2 gezeigten Alternativen kann das zylinderförmige Gehäuse 13 beispielsweise eine kreisförmige (siehe Figur 2a)), eine elliptische (siehe Figur 2b)) oder eine im Wesentlichen rechteckige Grundfläche (siehe Figur 2c)) aufweisen.

Die hinsichtlich der Zylinderachse 16 im Wesentlichen in Umfangsrichtung orientierten Enden 18a, 18b des Blechs 18 bilden einen Stoß, der mittels einer Schweißnaht 20 verbunden ist.

Die Schweißnaht 20 weist dabei von einer Innenfläche 22 des Gehäusemantels 14 einen Abstand a auf, der größer null ist.

In den dargestellten Ausführungsformen handelt es sich bei der Schweißnaht 20 um eine Laserschweißnaht.

Darüber hinaus weist das Ende 18a eine Abschrägung 24a und das Ende 18b eine Abschrägung 24b auf.

Diese schließen mit einer bezüglich der Zylinderachse 16 radial verlaufenden Ebene des Gehäusemantels 14 einen Winkel αₐ bzw. α_{b} ein, der mindestens 5° beträgt.

Die Abschrägungen 24a, 24b liegen innerhalb des Stoßes einander gegenüber.

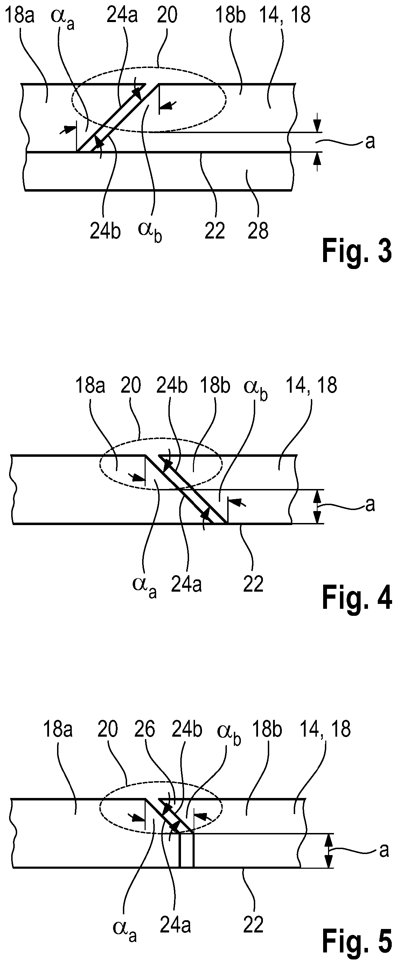

Dabei bildet eine Stoßkontur des Endes 18a eine Negativkontur einer Stoßkontur des Endes 18b umgekehrt, wenn die Enden 18a, 18b entlang der Zylinderachse 16 betrachtet werden (siehe Figuren 3 - 5).

Die Enden 18a, 18b liegen also flächig aneinander an.

Ein Vorteil der Abschrägungen besteht darin, dass beim Schließen des Mantels ein Einklemmen der Matte verhindert ist. Beispielsweise kann das Ende des Mantels, das "untenliegend" ist, zuerst geschlossen werden, und anschließend wird das "obenliegende" Ende geschlossen. Dies stellt sicher, dass die Matte sich nicht im Spalt zwischen den beiden Stirnflächen befindet.

In den Ausführungsformen gemäß der Figuren 3 und 4 sind die Abschrägungen 24a, 24b entgegengesetzt orientierte, über die gesamte Dicke des Blechs 18 verlaufende Fasen.

Alternativ kann, wie in Figur 5 dargestellt, eine der Abschrägungen, vorliegend die Abschrägung 24a, eine nur über einen Teil der Dicke des Blechs 18 verlaufende Fase sein. Die dieser Fase gegenüberliegende Abschrägung, vorliegend die Abschrägung 24b, ist dann an einem Blechfortsatz 26 angeordnet. Dabei entspricht eine radial zur Zylinderachse 16 orientierte Dicke des Blechfortsatzes 26 im Wesentlichen einer radial zur Zylinderachse 16 orientierten Höhe der Fase.

Somit weist der Gehäusemantel 14 in allen Ausführungsformen in radialer Richtung eine im Wesentlichen konstante Dicke auf, die der Blechstärke entspricht.

Innerhalb des Gehäuses 13 ist über eine Lagerungsmatte 28 ein Substrat 30 gehalten.

Dabei liegt die Lagerungsmatte 28 sowohl am Substrat 30 als auch am Gehäusemantel 14 im Wesentlichen flächig an (siehe Figur 2).

Die Anlage der Lagerungsmatte 28 am Substrat 30 ist dabei insbesondere binderfrei ausgeführt.

Das Substrat 30 wird im Wesentlichen durch eine vom Gehäusemantel 14 ausgehende, radiale Kompressionskraft im Gehäuse 13 gehalten. Dafür ist das Blech 18 des Gehäusemantels 14 in einer dem Gehäusemantelumfang entsprechenden Dimension dem Substrat 30 individuell angepasst. Anders gesagt, ist das Blech 18 bezüglich der tatsächlichen Abmessungen des Substrats 30 auf Maß gefertigt.

Dadurch entsteht durch ein Verschweißen der beiden Enden 18a, 18b des Blechs 18, die die in den Figuren 3 - 5 dargestellten Stöße bilden, eine vordefinierte radiale Kompressionskraft.

Die Schweißnaht 20 verläuft über die gesamte axiale Länge des Gehäusemantels 14.

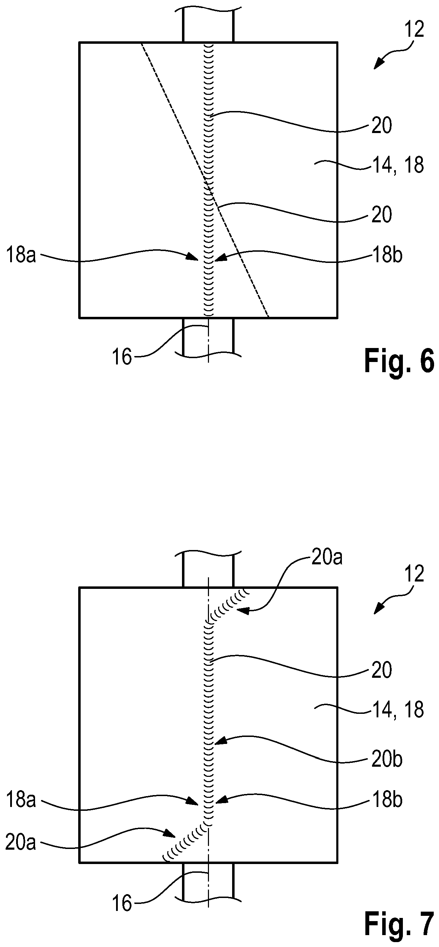

Dabei kann sie im Wesentlichen entlang der Zylinderachse 16 verlaufen (siehe Figuren 1 und 6).

Die Schweißnaht 20 kann auch, wie gestrichelt in Figur 6 eingezeichnet ist, in einem von 0° verschiedenen Winkel relativ zur axialen Richtung verlaufen. Falls die Schweißnaht zu einer Mattenerosion führt, befindet sich diese nicht vollständig in der Strömungsrichtung, so dass es keine Gefahr gibt, dass die Matte in Strömungsrichtung an einer Stelle durchgehend beschädigt wird.

Alternativ kann die Schweißnaht 20 in einem Bereich 20a, der an einem axialen Ende des Gehäusemantels 14 liegt, gegenüber der Zylinderachse 16 geneigt verlaufen (siehe Figur 7). In einem Mittelbereich 20b kann sie im Wesentlichen entlang der Zylinderachse 16 verlaufen.

Durch die Konfiguration mit schräg zur Zylinderachse 16 verlaufenden Bereichen 20a der Schweißnaht 20 wird erreicht, dass der Gehäusemantel 14 im Bereich seiner axialen Enden besonders stabil ist.

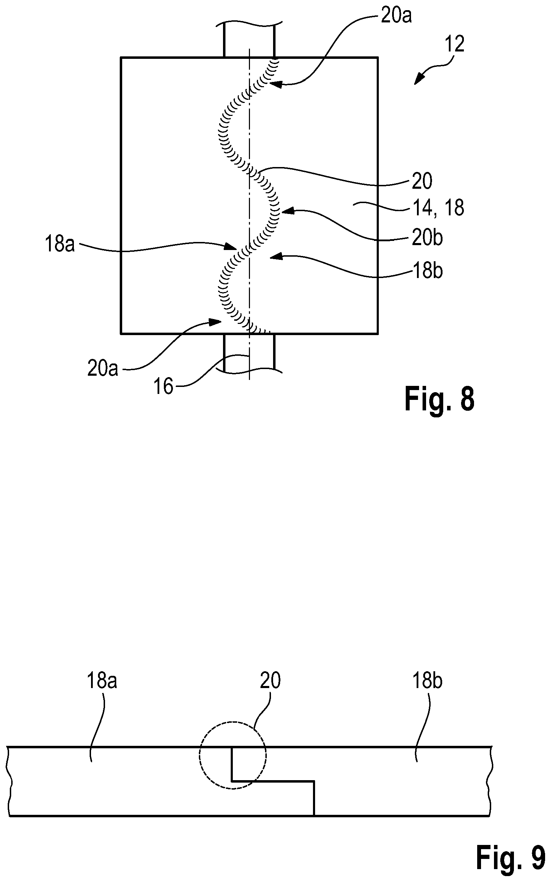

In einer weiteren Alternative verläuft die Schweißnaht 20 im Wesentlichen wellenförmig (siehe Figur 8).

Auch in dieser Variante kann die Anordnung der Schweißnaht 20 auf dem Gehäusemantel 14 derart gewählt sein, dass die Schweißnaht 20 in einem Bereich 20a, der an einem axialen Ende des Gehäusemantels 14 liegt, gegenüber der Zylinderachse 16 geneigt verläuft (vgl. auch Fig. 7).

In einem Mittelbereich 20b verläuft die Schweißnaht 20 jedoch im Unterschied zur Ausführungsform gemäß Figur 7 nicht gerade, sondern weiterhin wellenförmig.

Es wird so ein besonders stabiler Gehäusemantel geschaffen.

Im lediglich zum besseren Verständnis dienenden Beispiel aus Figur 9 werden anstelle von Abschrägungen an den Enden des Mantels nun Abstufungen verwendet. Auch dies erfüllt den Zweck, eine Beschädigung der Matte beim Schweißen zu verhindern.

Die Abstufung mit einer waagereicht verlaufenden Stufe kann mit geringem Aufwand durch Lasererodieren hergestellt werden. Auch hier wird beim Schließen des Mantels verhindert, dass die Matte im Spalt eingeklemmt wird.

## Patentansprüche

1. Abgasanlagenkomponente (12), insbesondere Katalysator oder Partikelfilter, für ein Abgassystem (10) eines Verbrennungsmotors eines Kraftfahrzeugs, mit einem Substrat (30), das in einem im Wesentlichen zylinderförmigen Gehäuse (13) gehalten ist, wobei das Gehäuse (13) einen Gehäusemantel (14) aufweist, der ein um eine Zylinderachse (16) gebogenes Blech (18) umfasst, dessen bezüglich der Zylinderachse (16) in Umfangsrichtung orientierte Enden (18a, 18b) einen mittels einer Schweißnaht (20) verbundenen Stoß ausbilden, wobei die Enden (18a, 18b) jeweils zumindest abschnittsweise eine Abschrägung (24a, 24b) aufweisen, **dadurch gekennzeichnet, dass** die Schweißnaht (20) von einer Innenfläche (22) des Gehäusemantels (14) beabstandet ist und die Abschrägungen (24a, 24b) innerhalb des Stoßes einander gegenüberliegen, wobei jede der Abschrägungen (24a, 24b) mit einer Radialebene des Gehäusemantels (14) einen Winkel (αₐ, α_{b}) von mindestens 5° einschließt.

2. Abgasanlagenkomponente (12) nach Anspruch 1, **dadurch gekennzeichnet, dass** in axialer Richtung betrachtet eine Stoßkontur eines der Enden (18a, 18b) eine Negativkontur einer Stoßkontur des jeweils anderen Endes (18a, 18b) ist.

3. Abgasanlagenkomponente (12) nach Anspruch 1 oder 2, **dadurch gekennzeichnet, dass** jede der Abschrägungen (24a, 24b) mit einer Radialebene des Gehäusemantels (14) einen Winkel (αₐ, α_{b}) von mindestens 10°, vorzugsweise von mindestens 20°, einschließt.

4. Abgasanlagenkomponente (12) nach einem der vorhergehenden Ansprüche, **dadurch gekennzeichnet, dass** die Abschrägungen (24a, 24b) entgegengesetzt orientierte, über die gesamte Dicke des Blechs (18) verlaufende Fasen sind.

5. Abgasanlagenkomponente (12) nach einem der Ansprüche 1 bis 3, **dadurch gekennzeichnet, dass** eine der Abschrägungen (24a, 24b) eine nur über einen Teil einer Dicke des Blechs (18) verlaufende Fase ist.

6. Abgasanlagenkomponente (12) nach Anspruch 5, **dadurch gekennzeichnet, dass** die der als Fase ausgebildeten Abschrägung (24a, 24b) gegenüberliegende Abschrägung (24a, 24b) an einem Blechfortsatz (26) angeordnet ist, insbesondere wobei eine radiale Dicke des Blechfortsatzes (26) im Wesentlichen einer radialen Höhe der Fase entspricht.

7. Abgasanlagenkomponente (12) nach einem der vorhergehenden Ansprüche, **dadurch gekennzeichnet, dass** die Schweißnaht (20) eine Laserschweißnaht ist, insbesondere wobei die Schweißnaht (20) im Wesentlichen über die gesamte axiale Länge des Gehäusemantels (14) verläuft.

8. Abgasanlagenkomponente (12) nach einem der vorhergehenden Ansprüche, **dadurch gekennzeichnet, dass** das Substrat (30) über eine Lagerungsmatte (28) am Gehäusemantel (14) gelagert ist, insbesondere wobei die Lagerungsmatte (28) sowohl am Substrat (30) als auch am Gehäusemantel (14) im Wesentlichen flächig anliegt.

9. Abgasanlagenkomponente (12) nach Anspruch 8, **dadurch gekennzeichnet, dass** die Lagerungsmatte (28) zwischenschichtfrei, insbesondere binderfrei, am Substrat (30) anliegt.

10. Abgasanlagenkomponente (12) nach Anspruch 8 oder 9, **dadurch gekennzeichnet, dass** das Blech (18) des Gehäusemantels (14) in einer dem Gehäusemantelumfang entsprechenden Dimension der Lagerungsmatte individuell angepasst ist, insbesondere einem Gewicht und/oder einem Flächengewicht der Lagerungsmatte individuell angepasst ist.

11. Abgasanlagenkomponente (12) nach einem der vorhergehenden Ansprüche, **dadurch gekennzeichnet, dass** der Gehäusemantel (14) in radialer Richtung eine im Wesentlichen konstante Dicke aufweist, insbesondere wobei die konstante Dicke einer Blechstärke entspricht.

12. Abgasanlagenkomponente (12) nach einem der vorhergehenden Ansprüche, **dadurch gekennzeichnet, dass** die Schweißnaht (20) in einem an einem axialen Ende des Gehäusemantels (14) liegenden Bereich (20a) gegenüber der Zylinderachse (16) geneigt verläuft und/oder in einem von den axialen Enden des Gehäusemantels (14) beabstandeten Mittelbereich (20b) im Wesentlichen entlang der Zylinderachse (16) verläuft.

13. Abgasanlagenkomponente (12) nach einem der Ansprüche 1 bis 11, **dadurch gekennzeichnet, dass** die Schweißnaht (20) zumindest in einem Mittelbereich in einem von 0° verschiedenen Winkel relativ zur axialen Richtung verläuft.

14. Abgasanlagenkomponente (12) nach einem der vorhergehenden Ansprüche, **dadurch gekennzeichnet, dass** das Blech (18) des Gehäusemantels (14) in einer dem Gehäusemantelumfang entsprechenden Dimension dem Substrat (30) individuell angepasst ist.

15. Abgasanlagenkomponente (12) nach einem der vorhergehenden Ansprüche, **dadurch gekennzeichnet, dass** das Substrat (30) im Wesentlichen durch eine vom Gehäusemantel (14) ausgehende, radiale Kompressionskraft im Gehäuse (13) gehalten ist.

## Claims

1. An exhaust system component (12), in particular a catalytic converter or a particle filter, for an exhaust system (10) of an internal combustion engine of a motor vehicle, comprising a substrate (30) which is held in a substantially cylindrical housing (13), the housing (13) having a housing jacket (14) which comprises a metal sheet (18) that is bent about a cylinder axis (16) and the ends (18a, 18b) of which oriented in the circumferential direction relative to the cylinder axis (16) form a joint connected by means of a weld seam (20), the ends (18a, 18b) each having a bevel (24a, 24b) at least in sections, **characterized in that** the weld seam (20) is spaced apart from an inner surface (22) of the housing jacket (14) and the bevels (24a, 24b) face each other within the joint, each of the bevels (24a, 24b) including an angle (αₐ, α_{b}) of at least 5 degrees with a radial plane of the housing jacket (14).

2. The exhaust system component (12) according to claim 1, **characterized in that**, viewed in the axial direction, a joint contour of one of the ends (18a, 18b) is a negative contour of a joint contour of the respective other end (18a, 18b).

3. The exhaust system component (12) according to claim 1 or 2, **characterized in that** each of the bevels (24a, 24b) includes an angle (αₐ, α_{b}) of at least 10 degrees, preferably of at least 20 degrees, with a radial plane of the housing jacket (14).

4. The exhaust system component (12) according to any of the preceding claims, **characterized in that** the bevels (24a, 24b) are chamfers oriented in opposition and extending over the entire thickness of the metal sheet (18).

5. The exhaust system component (12) according to any of claims 1 to 3, **characterized in that** one of the bevels (24a, 24b) is a chamfer extending over only a part of a thickness of the metal sheet (18).

6. The exhaust system component (12) according to claim 5, **characterized in that** the bevel (24a, 24b) facing the bevel (24a, 24b) formed as a chamfer is arranged on a metal sheet extension (26), in particular wherein a radial thickness of the metal sheet extension (26) corresponds substantially to a radial height of the chamfer.

7. The exhaust system component (12) according to any of the preceding claims, **characterized in that** the weld seam (20) is a laser weld seam, in particular wherein the weld seam (20) extends substantially over the entire axial length of the housing jacket (14).

8. The exhaust system component (12) according to any of the preceding claims, **characterized in that** the substrate (30) is mounted on the housing jacket (14) via a mounting mat (28), in particular wherein the mounting mat (28) rests substantially flat against both the substrate (30) and the housing jacket (14).

9. The exhaust system component (12) according to claim 8, **characterized in that** the mounting mat (28) rests against the substrate (30) interlayer-free, in particular binder-free.

10. The exhaust system component (12) according to claim 8 or 9, **characterized in that**, in a dimension corresponding to the housing jacket circumference, the metal sheet (18) of the housing jacket (14) is individually adapted to the mounting mat, in particular is individually adapted to a weight and/or a weight per unit area of the mounting mat.

11. The exhaust system component (12) according to any of the preceding claims, **characterized in that**, in the radial direction, the housing jacket (14) has a substantially constant thickness, in particular wherein the constant thickness corresponds to a sheet thickness.

12. The exhaust system component (12) according to any of the preceding claims, **characterized in that**, in an area (20a) at an axial end of the housing jacket (14), the weld seam (20) runs inclined with respect to the cylinder axis (16) and/or, in a central area (20b) spaced apart from the axial ends of the housing jacket (14), runs substantially along the cylinder axis (16).

13. The exhaust system component (12) according to any of claims 1 to 11, **characterized in that**, at least in a central area, the weld seam (20) runs at an angle different from 0 degrees, relative to the axial direction.

14. The exhaust system component (12) according to any of the preceding claims, **characterized in that**, in a dimension corresponding to the housing jacket circumference, the metal sheet (18) of the housing jacket (14) is individually adapted to the substrate (30).

15. The exhaust system component (12) according to any of the preceding claims, **characterized in that** the substrate (30) is held in the housing (13) substantially by a radial compression force originating from the housing jacket (14).

## Revendications

1. Composant (12) de système d'échappement, en particulier pot catalytique ou filtre à particules, pour un système d'échappement (10) d'un moteur à combustion interne d'un véhicule automobile, comprenant un substrat (30) qui est maintenu dans un boîtier (13) sensiblement cylindrique, le boîtier (13) présentant une enveloppe de boîtier (14) qui comprend une tôle (18) qui est pliée autour d'un axe de cylindre (16) et dont les extrémités (18a, 18b) orientées dans le sens circonférentiel par rapport à l'axe de cylindre (16) forment un joint de soudure lié par une soudure (20), les extrémités (18a, 18b) présentant chacune au moins par tronçons un chanfrein (24a, 24b), **caractérisé en ce que** la soudure (20) est espacée d'une surface intérieure (22) de l'enveloppe de boîtier (14) et **en ce que** les chanfreins (24a, 24b) sont opposés l'un à l'autre dans le joint de soudure, chacun des chanfreins (24a, 24b) renfermant un angle (αₐ, α_{b}) d'au moins 5° avec un plan radial de l'enveloppe de boîtier (14).

2. Composant (12) de système d'échappement selon la revendication 1, **caractérisé en ce que** vu dans le sens axial, un contour de joint de soudure de l'une des extrémités (18a, 18b) est un contour négatif d'un contour de joint de soudure de l'autre extrémité respective (18a, 18b).

3. Composant (12) de système d'échappement selon la revendication 1 ou 2, **caractérisé en ce que** chacun des chanfreins (24a, 24b) renferme un angle (αₐ, α_{b}) d'au moins 10°, de préférence d'au moins 20° avec un plan radial de l'enveloppe de boîtier (14).

4. Composant (12) de système d'échappement selon l'une des revendications précédentes, **caractérisé en ce que** les chanfreins (24a, 24b) sont des biseaux qui sont orientés de manière opposée et s'étendent sur toute l'épaisseur de la tôle (18).

5. Composant (12) de système d'échappement selon l'une des revendications 1 à 3, **caractérisé en ce que** l'un des chanfreins (24a, 24b) est un biseau qui s'étend uniquement sur une partie d'une épaisseur de la tôle (18).

6. Composant (12) de système d'échappement selon la revendication 5, **caractérisé en ce que** le chanfrein (24a, 24b) qui est opposé au chanfrein (24a, 24b) réalisé sous forme de biseau est agencé sur une saillie de tôle (26), une épaisseur radiale de la saillie de tôle (26) correspondant en particulier sensiblement à une hauteur radiale du biseau.

7. Composant (12) de système d'échappement selon l'une des revendications précédentes, **caractérisé en ce que** la soudure (20) est une soudure par laser, la soudure (20) s'étendant en particulier sensiblement sur toute la longueur axiale de l'enveloppe de boîtier (14).

8. Composant (12) de système d'échappement selon l'une des revendications précédentes, **caractérisé en ce que** le substrat (30) est monté sur l'enveloppe de boîtier (14) par l'intermédiaire d'un mat de support (28), le mat de support (28) reposant en particulier de manière sensiblement plane tant contre le substrat (30) que contre l'enveloppe de boîtier (14).

9. Composant (12) de système d'échappement selon la revendication 8, **caractérisé en ce que** le mat de support (28) repose contre le substrat (30) sans couche intermédiaire, en particulier sans liant.

10. Composant (12) de système d'échappement selon la revendication 8 ou 9, **caractérisé en ce que** la tôle (18) de l'enveloppe de boîtier (14) est individuellement adaptée au mat de support dans une dimension correspondant à la circonférence de l'enveloppe de boîtier et est en particulier individuellement adaptée à un poids et/ou à un poids par unité de surface du mat de support.

11. Composant (12) de système d'échappement selon l'une des revendications précédentes, **caractérisé en ce que** l'enveloppe de boîtier (14) présente, dans le sens radial, une épaisseur sensiblement constante, l'épaisseur constante correspondant en particulier à une épaisseur de tôle.

12. Composant (12) de système d'échappement selon l'une des revendications précédentes, **caractérisé en ce que** dans une zone (20a) ménagée à une extrémité axiale de l'enveloppe de boîtier (14), la soudure (20) s'étend de manière inclinée par rapport à l'axe de cylindre (16) et/ou s'étend sensiblement le long de l'axe de cylindre (16) dans une zone médiane (20b) espacée des extrémités axiales de l'enveloppe de boîtier (14).

13. Composant (12) de système d'échappement selon l'une des revendications 1 à 11, **caractérisé en ce que** la soudure (20) s'étend selon un angle différent de 0° par rapport au sens axial au moins dans une zone médiane.

14. Composant (12) de système d'échappement selon l'une des revendications précédentes, **caractérisé en ce que** la tôle (18) de l'enveloppe de boîtier (14) est individuellement adaptée au substrat (30) dans une dimension correspondant à la circonférence de l'enveloppe de boîtier.

15. Composant (12) de système d'échappement selon l'une des revendications précédentes, **caractérisé en ce que** le substrat (30) est maintenu dans le boîtier (13) sensiblement par une force de compression radiale provenant de l'enveloppe de boîtier (14).
